# EUROPEAN PATENT APPLICATION

(11) **EP 4 663 402 A1**
(43) Date of publication of application: **17.12.2025**
(21) Application number: 25166244.1
(22) Date of filing: 26.03.2025
(51) Int. Cl.: B32B 7/12, B29C 65/00, B32B 15/14

(54) **METAL TO COMPOSITE JOINTS**

(30) Priority: 14.06.2024 US 202463660313 P; 27.08.2024 US 202418816922
(71) Applicant: The Boeing Company, Arlington, VA 22202 (US)
(72) Inventor: Louie, Michael Kenneth-Que, Arlington, 22202 (US); Spencer, Scott Michael, Arlington, 22202 (US); Wilkinson, Marianne Elizabeth, Arlington, 22202 (US); Lee, Michael Alan, Arlington, 22202 (US)
(74) Representative: Witte, Weller & Partner Patentanwälte mbB

(57) **Abstract**

Metal to composite joints and methods of forming are presented. A metal to composite joint for a platform comprises two metal structural components forming a portion of a first surface and a portion of a second surface of the metal to composite joint; and a dividing set of composite plies between the two metal structural components providing an escape path for volatiles between the two metal structural components.

## Description

### BACKGROUND INFORMATION

### 1. Field:

The present disclosure relates generally to forming composite joints and more specifically to forming metal to composite joints.

### 2. Background:

In an aircraft, a metal to composite joint can be used to join wings to the body of the aircraft. The metal to composite joint can be a step lap joint between the composite plies and the metal component. In large structures, metal to composite joints present manufacturing challenges.

Gaps may be created at each step of a step lap metal to composite joint, introducing air into the laminate. On a thick large part, air and volatiles inside the laminate at the steps is undesirably difficult to evacuate during fabrication and autoclave cure. Remaining air and volatiles can lead to undesirable conditions such as porosity. To reduce inconsistencies, multiple cure cycles may be used, increasing cycle time and utilizing more resources.

Therefore, it would be desirable to have a method and apparatus that takes into account at least some of the issues discussed above, as well as other possible issues. It would be desirable to have a method and apparatus to reduce porosity within structures with metal to composite joints.

### SUMMARY

An embodiment of the present disclosure provides a metal to composite joint for a platform. The metal to composite joint comprises two metal structural components forming a portion of a first surface and a portion of a second surface of the metal to composite joint, and a dividing set of composite plies between the two metal structural components providing an escape path for volatiles between the two metal structural components.

Another embodiment of the present disclosure provides a metal to composite joint for a platform. The metal to composite joint comprises a first metal structural component comprising a stepped face and a planar face, a first set of composite plies comprising faying surfaces complementary to the stepped face of the first metal structural component, a second metal structural component comprising a stepped face and a planar face, a second set of composite plies comprising faying surfaces complementary to the stepped face of the second metal structural component, and a dividing set of composite plies between the two metal structural components providing an escape path for volatiles between the two metal structural components.

Yet another embodiment of the present disclosure provides a method of forming a metal to composite joint of a structure. A dividing set of composite plies is placed atop a first metal structural component. A second metal structural component is placed onto the dividing set of composite plies. The first metal structural component and the second metal structural component are bonded to the dividing set of composite plies.

A yet further embodiment of the present disclosure provides a method of removing volatiles from a metal to composite joint of a structure. The metal to composite joint is laid up with a dividing set of composite plies between a first metal structural component and a second metal structural component. The first metal structural component and the second metal structural component are bonded to the dividing set of composite plies. Volatiles are evacuated along the dividing set of composite plies and between the first metal structural component and the second metal structural component during bonding.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a cross-sectional view of a metal to composite joint in accordance with an illustrative embodiment;
**Figure 4** is an illustration of a cross-sectional view of a metal to composite joint in accordance with an illustrative embodiment;
**Figure 5** is an illustration of a cross-sectional view of a metal to composite joint in accordance with an illustrative embodiment;
**Figure 6** is a flowchart of a method of forming a metal to composite joint of a structure in accordance with an illustrative embodiment;
**Figure 7** is a flowchart of a method of releasing volatiles from a metal to composite joint of a structure in accordance with an illustrative embodiment;
**Figure 8** is an illustration of an aircraft manufacturing and service method in a form of a block diagram in accordance with an illustrative embodiment; and
**Figure 9** is an illustration of an aircraft in a form of a block diagram in which an illustrative embodiment may be implemented.

### DETAILED DESCRIPTION

The illustrative examples recognize and take into account one or more considerations. The illustrative examples recognize and take into account that smaller composite parts have less issues with evacuating volatiles. The illustrative examples recognize and take into account that smaller composite parts have fewer volatiles as volatiles travel interlaminarly as opposed to through thickness. The illustrative examples recognize and take into account that air/volatiles travel significantly better between plies than through thickness.

The illustrative examples recognize and take into account that volatiles cannot move through titanium. The illustrative examples recognize and take into account that a hybrid titanium composite part will help reduce weight when compared to a titanium part.

The illustrative examples provide a new design that comprises titanium and carbon fiber composite. The titanium and carbon fiber composite can be used in airplane wing skins. In these illustrative examples, titanium is spliced to at least one end of a large composite structure.

The illustrative examples present metal to composite joints with more than one titanium component through the thickness. The illustrative examples "split" large titanium parts into two portions to allow for composite in between. The illustrative examples provide escape paths for air and volatiles through the composite layers between the titanium parts.

The illustrative examples improve both manufacturability as well as damage tolerance for titanium and composite structures. Splitting the titanium and using composite layers in between the titanium components helps manage scale for a design with titanium on the inboard side of a large wing skin or other sizeable part. The illustrative examples could be used on the inboard and outboard ends of wing skins for weight reduction.

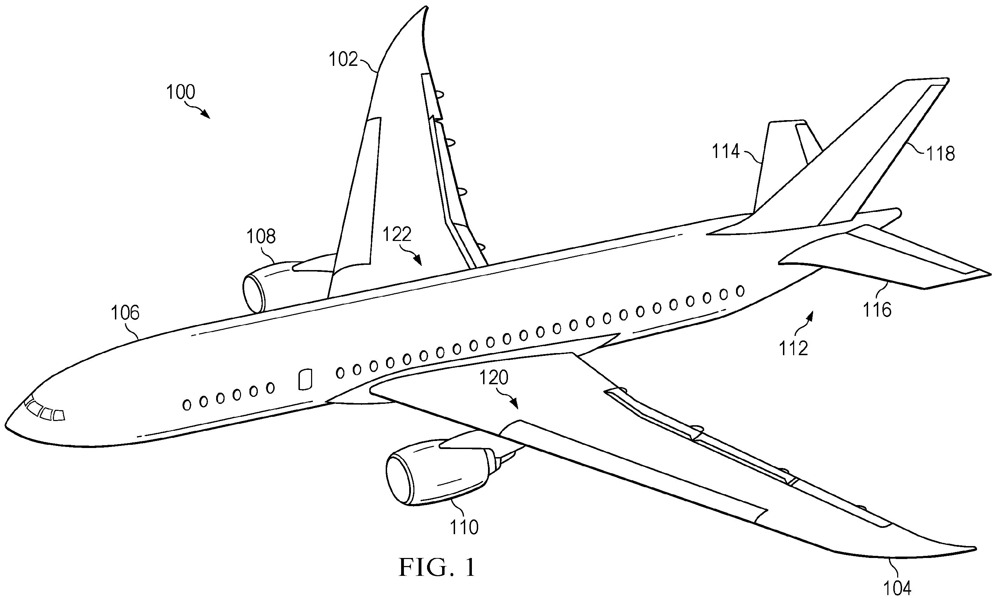

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have a metal to composite joint formed using the illustrative examples. The metal to composite joints of the illustrative examples can be used to connect at least one of wing **102** or wing **104** to body **106.**

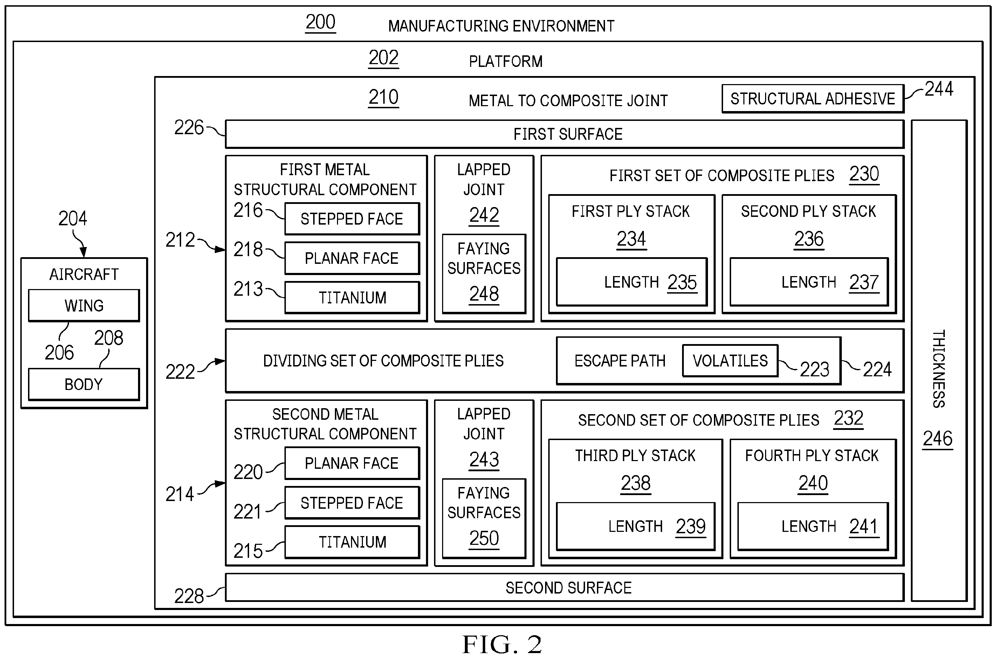

Turning now to **Figure 2****,** an illustration of a block diagram of a manufacturing environment is depicted in accordance with an illustrative embodiment. Metal to composite joint **210** of platform **202** can be formed in manufacturing environment **200.**

Platform **202** can take a number of different forms. For example, platform **202** can be selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a tanker aircraft, a surface ship, a tank, a personnel carrier, a train, a spacecraft, a space station, a satellite, a submarine, an automobile, a power plant, a bridge, a dam, a house, a manufacturing facility, a building, a robot, a robotic arm, a crane, and other suitable types of platforms.

In some illustrative examples, platform **202** can be aircraft **204.** In some illustrative examples, platform **202** is wing **206** of aircraft **204.**

In some illustrative examples, aircraft **100** of Figure **1** can be a physical implementation of aircraft **204.** In some illustrative examples, when metal to composite joint **210** is part of aircraft **204,** metal to composite joint **210** can connect wing **206** to body **208** of aircraft **204.**

Metal to composite joint **210** for platform **202** comprises first metal structural component **212** and second metal structural component **214** with dividing set of composite plies **222** between first metal structural component **212** and second metal structural component **214.** As used herein, a "set" of items is one or more items. Dividing set of composite plies **222** comprises one or more composite plies. Dividing set of composite plies **222** provides escape path **224** for volatiles **223** in metal to composite joint **210.** Escape path **224** extends interlaminarly within metal to composite joint **210** for platform **202.**

Metal to composite joint **210** for platform **202** comprises first metal structural component **212,** first set of composite plies **230,** second metal structural component **214,** second set of composite plies **232,** and dividing set of composite plies **222.** First metal structural component **212** comprises stepped face **216** and planar face **218.** First set of composite plies **230** comprises faying surfaces complementary to stepped face **216** of the first metal structural component **212.** Second metal structural component **214** comprises stepped face **221** and planar face **220.** Second set of composite plies **232** comprises faying surfaces complementary to stepped face **221** of second metal structural component **214.** Dividing set of composite plies **222** between the two metal structural components provides escape path **224** for volatiles **223** between the two metal structural components. In some illustrative examples, first set of composite plies **230** is described as abutting stepped face **216** of the first metal structural component **212.** In some illustrative examples, second set of composite plies **232** is described as abutting stepped face **221** of second metal structural component **214.**

In some illustrative examples, first set of composite plies **230** is complementary to first metal structural component **212** to form lapped joint **242.** Lapped joint **242** comprises faying surfaces **248** of first metal structural component **212** and first set of composite plies **230.** In some illustrative examples, second set of composite plies **232** is complementary to second metal structural component **214** to form lapped joint **243.** Lapped joint **243** comprises faying surfaces **250** of second metal structural component **214** and second set of composite plies **232.** Dividing set of composite plies **222** extends between first set of composite plies **230** and second set of composite plies **232.**

In some illustrative examples, dividing set of composite plies **222** extends between and is adhered to the planar faces of the two metal structural components, planar face **218** of first metal structural component **212** and planar face **220** of second metal structural component **214.** In some illustrative examples, dividing set of composite plies **222** extends between and is adhered to the stepped faces of the two metal structural components, stepped face **216** of first metal structural component **212** and stepped face **221** of second metal structural component **214.**

In some illustrative examples, first metal structural component **212** and second metal structural component **214** comprise titanium. As depicted, first metal structural component **212** comprises titanium **213.** As depicted, second metal structural component **214** comprises titanium **215.**

Metal to composite joint **210** comprises any desirable quantity of metal structural components with dividing composite plies between the metal structural components. In some illustrative examples, metal to composite joint **210** for platform **202** comprises two metal structural components forming a portion of first surface **226** and a portion of second surface **228** of metal to composite joint **210,** and dividing set of composite plies **222** between the two metal structural components providing escape path **224** for volatiles **223** between the two metal structural components.

In some illustrative examples, stepped face **216** of first metal structural component **212** forms a portion of first surface **226.** In some illustrative examples, planar face **218** forms a portion of first surface **226.** The remainder of first surface **226** is formed by first set of composite plies **230.** In some illustrative examples, first ply stack **234** of first set of composite plies **230** forms a portion of first surface **226.**

In some illustrative examples, stepped face **221** of second metal structural component **214** forms a portion of second surface **228.** In some illustrative examples, planar face **220** forms a portion of second surface **228.** The remainder of second surface **228** is formed by second set of composite plies **232.** In some illustrative examples, first ply stack **234** of first set of composite plies **230** forms a portion of first surface **226.**

First set of composite plies **230** comprises faying surfaces **248** with first metal structural component **212** of the two metal structural components and second set of composite plies **232** comprises faying surfaces **250** with second metal structural component **214** of the two metal structural components to form lapped joint **242** and lapped joint **243.** In some illustrative examples, first set of composite plies **230** can be described as abutting first metal structural component **212** of the two metal structural components and second set of composite plies **232** can be described as abutting second metal structural component **214** of the two metal structural components to form lapped joint **242** and lapped joint **243.** First set of composite plies **230** forms lapped joint **242** with stepped face **216** of first metal structural component **212.** In lapped joint **242,** lengths of the ply stacks of first set of composite plies **230** vary to form a joint with stepped face **216** of first metal structural component **212.** Second set of composite plies **232** forms lapped joint **243** with stepped face **221** of second metal structural component **214.** In lapped joint **243,** lengths of the ply stacks of second set of composite plies **232** vary to form a joint with stepped face **221** of second metal structural component **214.**

When stepped face **216** forms a portion of first surface **226,** first metal structural component **212** extends into first set of composite plies **230.** When stepped face **216** forms a portion of first surface **226,** longest plies of first set of composite plies **230** form a portion of first surface **226.** In these illustrative examples, length **235** of first ply stack **234** forming a portion of first surface **226** is longer than length **237** of plies in second ply stack **236.** Second ply stack **236** is farther into metal to composite joint **210** through thickness **246** moving from first surface **226** to second surface **228.**

When stepped face **221** forms a portion of second surface **228,** second metal structural component **214** extends into second set of composite plies **232.** When stepped face **221** forms a portion of second surface **228,** longest plies of second set of composite plies **232** form a portion of second surface **228.** In these illustrative examples, length **241** of fourth ply stack **240** forming a portion of second surface **228** is longer than length **239** of plies in third ply stack **238.** Third ply stack **238** is farther into metal to composite joint **210** through thickness **246** moving from second surface **228** to first surface **226.**

In these illustrative examples, first metal structural component **212** and second metal structural component **214** appear to extend into the composite material of first set of composite plies **230** and second set of composite plies **232.** In other illustrative examples, composite material of first set of composite plies **230** and second set of composite plies **232** appears to extend between first metal structural component **212** and second metal structural component **214.**

When composite material of first set of composite plies **230** and second set of composite plies **232** appears to extend between first metal structural component **212** and second metal structural component **214,** composite plies forming first surface **226** and second surface **228** have shortest lengths of first set of composite plies **230** and second set of composite plies **232.**

In some illustrative examples, dividing set of composite plies **222** is adhered to the two metal structural components. In some illustrative examples, structural adhesive **244** is applied to at least one of dividing set of composite plies **222,** first metal structural component **212** or second metal structural component **214.**

Although not depicted in metal to composite joint **210,** a third metal structural component can be present between the two metal structural components. In these illustrative examples, dividing set of composite plies **222** is adhered to one of the two metal structural components and the third metal structural component.

In some illustrative examples, the two metal structural components, first metal structural component **212** and second metal structural component **214,** are symmetric about a center of metal to composite joint **210** through thickness **246.** In other illustrative examples, the two metal structural components, first metal structural component **212** and second metal structural component **214,** are asymmetric about a center of metal to composite joint **210** through thickness **246.** In some illustrative examples, the two metal structural components, first metal structural component **212** and second metal structural component **214,** have a same design. In other illustrative examples, the two metal structural components, first metal structural component **212** and second metal structural component **214,** have different designs.

In some illustrative examples, structural adhesive **244** covers faying surfaces of the two metal structural components with first set of composite plies **230** and second set of composite plies **232.** In some illustrative examples, structural adhesive **244** runs at least partially between first set of composite plies **230** and dividing set of composite plies **222.** In some illustrative examples, structural adhesive **244** runs partially into first set of composite plies **230.** In some illustrative examples, structural adhesive **244** runs at least partially between second set of composite plies **232** and dividing set of composite plies **222.** In some illustrative examples, structural adhesive **244** runs partially into second set of composite plies **232.**

In some illustrative examples, dividing set of composite plies **222** is bonded to the planar faces of the first metal structural component **212** and second metal structural component **214.** In some illustrative examples, dividing set of composite plies **222** is bonded to the stepped faces of the first metal structural component **212** and second metal structural component **214.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, more than two metal structural components can be present. As another example, when more than two metal structural components are present, more than one set of dividing composite plies can be present.

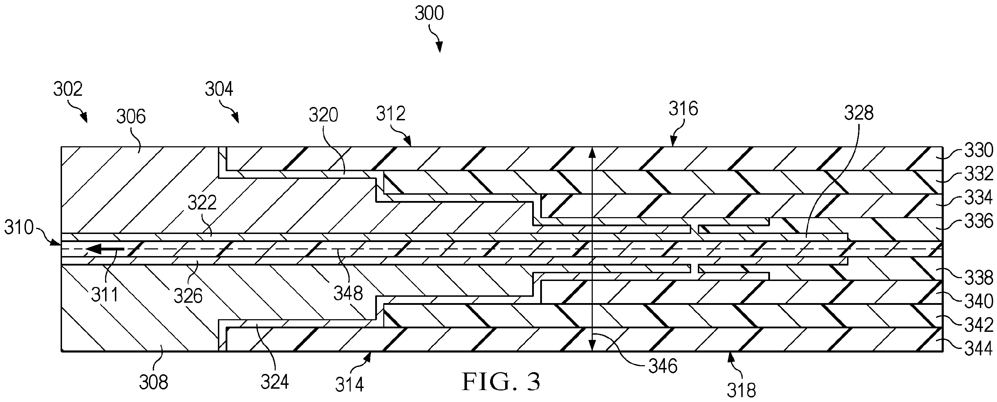

Turning now to **Figure 3****,** an illustration of a cross-sectional view of a metal to composite joint is depicted in accordance with an illustrative embodiment. Metal to composite joint **300** is a physical implementation of metal to composite joint **210** of Figure **2****.** Metal to composite joint **300** comprises metal structural components **302** and composite material **304.** Metal structural components **302** comprise first metal structural component **306** and second metal structural component **308.**

The two metal structural components, first metal structural component **306** and second metal structural component **308,** form a portion of first surface **316** and a portion of second surface **318** of the metal to composite joint **300.** Dividing set of composite plies **310** is between the two metal structural components providing escape path **311** for volatiles between the two metal structural components. In this illustrative example, volatiles can escape from metal to composite joint **300** by traveling interlaminarly along dividing set of composite plies **310.**

In this illustrative example, dividing set of composite plies **310** is adhered to the two metal structural components, first metal structural component **306** and second metal structural component **308.** In this illustrative example, dividing set of composite plies **310** is bonded to planar face **322** of first metal structural component **306** and planar face **326** of second metal structural component **308.** In this illustrative example, structural adhesive **328** adheres dividing set of composite plies **310** to each of planar face **322** and planar face **326.**

Dividing set of composite plies **310** comprises any desirable quantity of composite plies. In some illustrative examples, dividing set of composite plies **310** comprises a stack-up of six composite plies.

First metal structural component **306** comprises stepped face **320** and planar face **322.** Second metal structural component **308** comprises stepped face **324** and planar face **326.** First set of composite plies **312** comprises faying surfaces complementary to first metal structural component **306** of the two metal structural components. Second set of composite plies **314** comprises faying surfaces complementary to second metal structural component **308** of the two metal structural components. First set of composite plies **312** is complementary to first metal structural component **306.** Second set of composite plies **314** is complementary to second metal structural component **308.**

First set of composite plies **312** comprises first ply stack **330,** second ply stack **332,** third ply stack **334,** and fourth ply stack **336.** Second set of composite plies **314** comprises fifth ply stack **338,** sixth ply stack **340,** seventh ply stack **342,** and eighth ply stack **344.**

In some illustrative examples, manufacturing acceptable gaps can be present between first sets of composite plies **312** and stepped face **320** of first metal structural component **306.** In some illustrative examples, manufacturing acceptable gaps can be present between second sets of composite plies **314** and stepped face **324** of second metal structural component **308.** The volatiles from the gaps can be evacuated through escape path **311** during processing of metal to composite joint **300.**

In this illustrative example, the two metal structural components, first metal structural component **306** and second metal structural component **308,** are symmetric about center **348** of metal to composite joint **300** through thickness **346.** In this illustrative example, planar face **322** faces planar face **326** about center **348** of metal to composite joint **300** through thickness **346.** In this illustrative example, the longest composite plies of first set of composite plies **312** form a portion of first surface **316.** In this illustrative example, the longest composite plies of second set of composite plies **314** form a portion of second surface **318.** In this illustrative example, the two metal structural components appear to "extend into" the composite material as the longest portions of stepped face **320** and stepped face **324** are near center **348.**

Dividing set of composite plies **310** extends between first set of composite plies **312** and second set of composite plies **314.** First set of composite plies **312** forms a lapped joint with stepped face **320** of first metal structural component **306.** Second set of composite plies **314** forms a lapped joint with stepped face **324** of second metal structural component **308.**

In this illustrative example, structural adhesive **328** covers faying surfaces of the two metal structural components, first metal structural component **306** and second metal structural component **308,** with first set of composite plies **312** and second set of composite plies **314.** In this illustrative example, structural adhesive **328** adheres first set of composite plies **312** to first metal structural component **306.** In this illustrative examples, structural adhesive **328** adheres second set of composite plies **314** to second metal structural component **308.** In this illustrative examples, structural adhesive **328** extends partially between some ply stacks of first set of composite plies **312.** As depicted, structural adhesive **328** extends partially between third ply stack **334** and fourth ply stack **336.** As depicted, structural adhesive **328** extends partially between fourth ply stack **336** and dividing set of composite plies **310.** As depicted, structural adhesive **328** extends partially between dividing set of composite plies **310** and fifth ply stack **338.** As depicted, structural adhesive **328** extends partially between fifth ply stack **338** and sixth ply stack **340.**

In some illustrative examples, the two metal structural components, first metal structural component **306** and second metal structural component **308,** comprise titanium. In some illustrative examples, titanium is used based on its compression strength.

In some illustrative examples, metal to composite joint **300** can be a component of a wing of an aircraft. In some illustrative examples, metal to composite joint **300** can connect a wing of an aircraft to the body of the aircraft.

As depicted, the two metal structural components comprise first metal structural component **306** comprising stepped face **320** and planar face **322,** and second metal structural component **308** comprising stepped face **324** and planar face **326.** In this illustrative example, the planar faces of first metal structural component **306** and second metal structural component **308** are internal to the platform. In this illustrative example, the stepped faces of first metal structural component **306** and second metal structural component **308** form part of surfaces of the platform.

Metal to composite joint **300** is a non-limiting example. In this illustrative example, metal to composite joint **300** is symmetric about center **348** through thickness **346.** In other illustrative examples, metal to composite joint **300** can be asymmetric. Although four metal structural components are depicted, a metal to composite joint of the illustrative examples can have any desirable quantity of metal structural components. Additionally, although metal structural components **302** each extends towards the composite material an equal distance, in other illustrative examples at least one metal structural component can be a different size, different shape, or other different configuration.

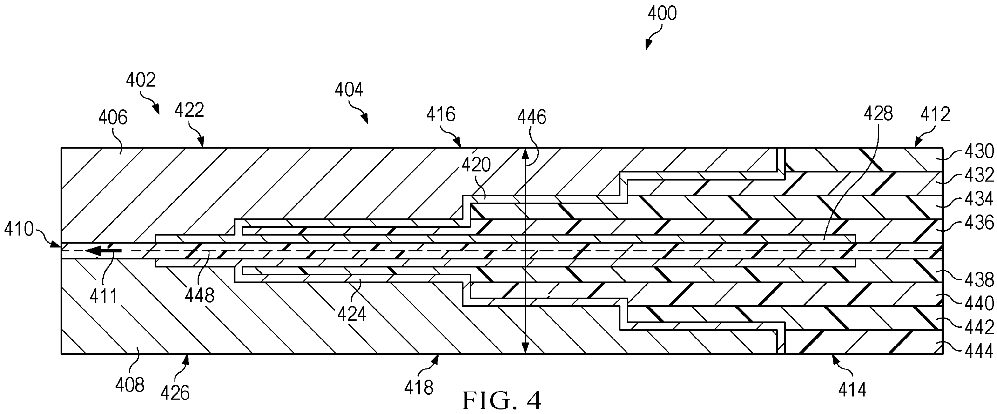

Turning now to **Figure 4****,** an illustration of a cross-sectional view of a metal to composite joint is depicted in accordance with an illustrative embodiment. Metal to composite joint **400** is a physical implementation of metal to composite joint **210** of Figure **2****.** Metal to composite joint **400** comprises metal structural components **402** and composite material **404.** Metal structural components **402** comprise first metal structural component **406** and second metal structural component **408.**

The two metal structural components, first metal structural component **406** and second metal structural component **408,** form a portion of first surface **416** and a portion of second surface **418** of the metal to composite joint **400.** Dividing set of composite plies **410** is between the two metal structural components providing escape path **411** for volatiles between the two metal structural components. In this illustrative example, volatiles can escape from metal to composite joint **400** by traveling interlaminarly along dividing set of composite plies **410.**

In this illustrative example, dividing set of composite plies **410** is adhered to the two metal structural components, first metal structural component **406** and second metal structural component **408.** In this illustrative example, dividing set of composite plies **410** is bonded to stepped face **420** of first metal structural component **406** and stepped face **424** of second metal structural component **408.** In this illustrative example, structural adhesive **428** adheres dividing set of composite plies **410** to each of stepped face **420** and stepped face **424.**

Dividing set of composite plies **410** comprises any desirable quantity of composite plies. In some illustrative examples, dividing set of composite plies **410** comprises a stack-up of six composite plies.

First metal structural component **406** comprises stepped face **420** and planar face **422.** Second metal structural component **408** comprises stepped face **424** and planar face **426.** First set of composite plies **412** comprises faying surfaces complementary to first metal structural component **406** of the two metal structural components. Second set of composite plies **414** comprises faying surfaces complementary to second metal structural component **408** of the two metal structural components. First set of composite plies **412** is complementary to first metal structural component **406.** Second set of composite plies **414** is complementary to second metal structural component **408.**

First set of composite plies **412** comprises first ply stack **430,** second ply stack **432,** third ply stack **434,** and fourth ply stack **436.** Each stack of first set of composite plies comprises any desirable quantity of plies. In some illustrative examples, each stack of plies comprises six plies. Second set of composite plies **414** comprises fifth ply stack **438,** sixth ply stack **440,** seventh ply stack **442,** and eighth ply stack **444.**

In some illustrative examples, manufacturing acceptable gaps can be present between first sets of composite plies **412** and stepped face **420** of first metal structural component **406.** In some illustrative examples, manufacturing acceptable gaps can be present between second sets of composite plies **414** and stepped face **424** of second metal structural component **408.** The volatiles from the gaps can be evacuated through escape path **411** during processing of metal to composite joint **400.**

In this illustrative example, the two metal structural components, first metal structural component **406** and second metal structural component **408,** are symmetric about center **448** of metal to composite joint **400** through thickness **446.** In this illustrative example, planar face **422** faces away from planar face **426** about center **448** of metal to composite joint **400** through thickness **446.** In this illustrative example, stepped face **420** faces towards stepped face **424** about center **448** of metal to composite joint **400** through thickness **446.** In this illustrative example, planar face **422** forms a portion of first surface **416.** In this illustrative example, the shortest composite plies of first set of composite plies **412** form a portion of first surface **416.** In this illustrative example, the shortest composite plies of second set of composite plies **414** form a portion of second surface **418.** In this illustrative example, the two metal structural components appear to "extend into" the composite material as the longest portions of stepped face **420** and stepped face **424** are near center **448.**

Dividing set of composite plies **410** extends between first set of composite plies **412** and second set of composite plies **414.** First set of composite plies **412** forms a lapped joint with stepped face **420** of first metal structural component **406.** Second set of composite plies **414** forms a lapped joint with stepped face **424** of second metal structural component **408.**

In this illustrative example, structural adhesive **428** covers faying surfaces of the two metal structural components, first metal structural component **406** and second metal structural component **408,** with first set of composite plies **412** and second set of composite plies **414.** In this illustrative example, structural adhesive **428** adheres first set of composite plies **412** to first metal structural component **406.** In this illustrative examples, structural adhesive **428** adheres second set of composite plies **414** to second metal structural component **408.** As depicted, structural adhesive **428** extends partially between fourth ply stack **436** and dividing set of composite plies **410.** As depicted, structural adhesive **428** extends partially between dividing set of composite plies **410** and fifth ply stack **438.**

In some illustrative examples, the two metal structural components, first metal structural component **406** and second metal structural component **408,** comprise titanium.

In some illustrative examples, metal to composite joint **400** can be a component of a wing of an aircraft. In some illustrative examples, metal to composite joint **400** can connect a wing of an aircraft to the body of the aircraft.

As depicted, the two metal structural components comprise first metal structural component **406** comprising stepped face **420** and planar face **422,** and second metal structural component **408** comprising stepped face **424** and planar face **426.** In this illustrative example, the planar faces of first metal structural component **406** and second metal structural component **408** are internal to the platform. In this illustrative example, the stepped faces of first metal structural component **406** and second metal structural component **408** form part of surfaces of the platform.

Metal to composite joint **400** is a non-limiting example. In this illustrative example, metal to composite joint **400** is symmetric about center **448** through thickness **446.** In other illustrative examples, metal to composite joint **400** can be asymmetric. Although four metal structural components are depicted, a metal to composite joint of the illustrative examples can have any desirable quantity of metal structural components. Additionally, although metal structural components **402** each extends towards the composite material an equal distance, in other illustrative examples at least one metal structural component can be a different size, different shape, or other different configuration.

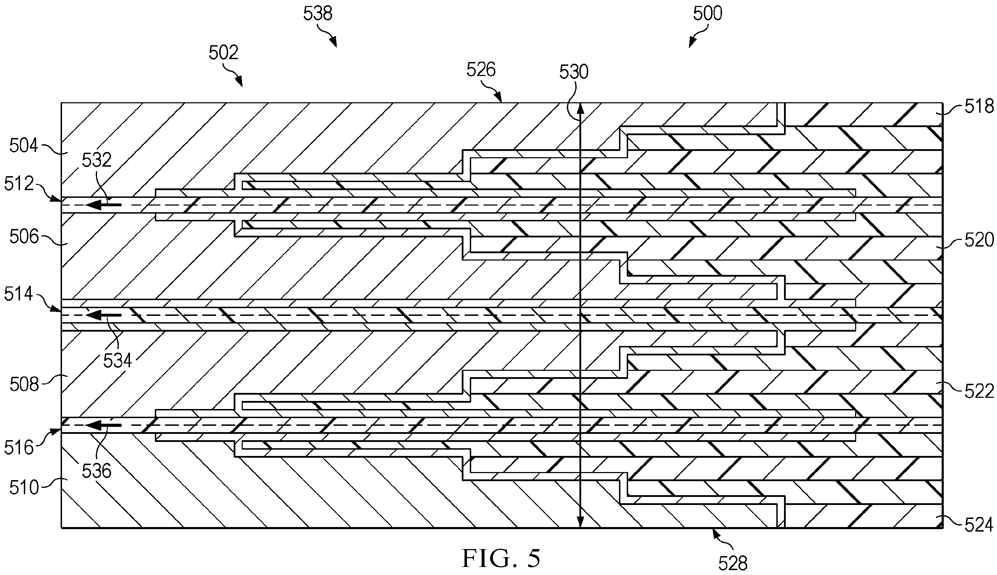

Turning now to **Figure 5****,** an illustration of a cross-sectional view of a metal to composite joint is depicted in accordance with an illustrative embodiment. Metal to composite joint **500** is a physical implementation of metal to composite joint **210.** Metal to composite joint **500** comprises metal structural components **502** separated by sets of dividing composite plies. Metal structural components **502** comprises first metal structural component **504,** second metal structural component **506,** third metal structural component **508,** and fourth metal structural component **510.** In this illustrative example, the sets of dividing composite plies include dividing set of composite plies **512,** dividing set of composite plies **514,** and dividing set of composite plies **516.**

In this illustrative example, metal to composite joint **500** further comprises first set of composite plies **518,** second set of composite plies **520,** third set of composite plies **522,** and fourth set of composite plies **524.** In this illustrative example, metal to composite joint **500** comprises first surface **526** and second surface **528.** By moving through thickness **530** from first surface **526** to second surface **528** of metal to composite joint **500,** each of metal structural components **502,** first set of composite plies **518,** dividing set of composite plies **512,** second set of composite plies **520,** dividing set of composite plies **514,** third set of composite plies **522,** dividing set of composite plies **516,** and fourth set of composite plies **524.**

In this illustrative example, each of the sets of dividing composite plies provides an escape path for volatiles from metal to composite joint **500.** Dividing set of composite plies **512** provides escape path **532** for movement of volatiles. Dividing set of composite plies **514** provides escape path **534** for movement of volatiles. Dividing set of composite plies **516** provides escape path **536** for movement of volatiles.

By moving along escape path **532,** escape path **534,** or escape path **536,** volatiles move interlaminarly through structure **538** having metal to composite joint **500.** By providing dividing set of composite plies **512,** dividing set of composite plies **514,** and dividing set of composite plies **516,** structure **538** has improved ability to be evacuated. Metal to composite joint **500** with dividing set of composite plies **512,** dividing set of composite plies **514,** and dividing set of composite plies **516** has a lower porosity than a structure with a single titanium component extending through thickness **530** without dividing composite plies. Metal to composite joint **500** with dividing set of composite plies **512,** dividing set of composite plies **514,** and dividing set of composite plies **516** can have a lower manufacturing time without repeated heating for evacuation. Metal to composite joint **500** with dividing set of composite plies **512,** dividing set of composite plies **514,** and dividing set of composite plies **516** can have improved quality due to the presence of the sets of dividing composite plies.

Metal to composite joint **500** is a non-limiting example. In this illustrative example, metal to composite joint **500** is symmetric about the center of metal to composite joint **500** through thickness **530.** In other illustrative examples, metal to composite joint **500** can be asymmetric. Although four metal structural components are depicted, a metal to composite joint of the illustrative examples can have any desirable quantity of metal structural components. Additionally, although metal structural components **502** each extends towards the composite material an equal distance, in other illustrative examples at least one metal structural component can be a different size, different shape, or other different configuration.

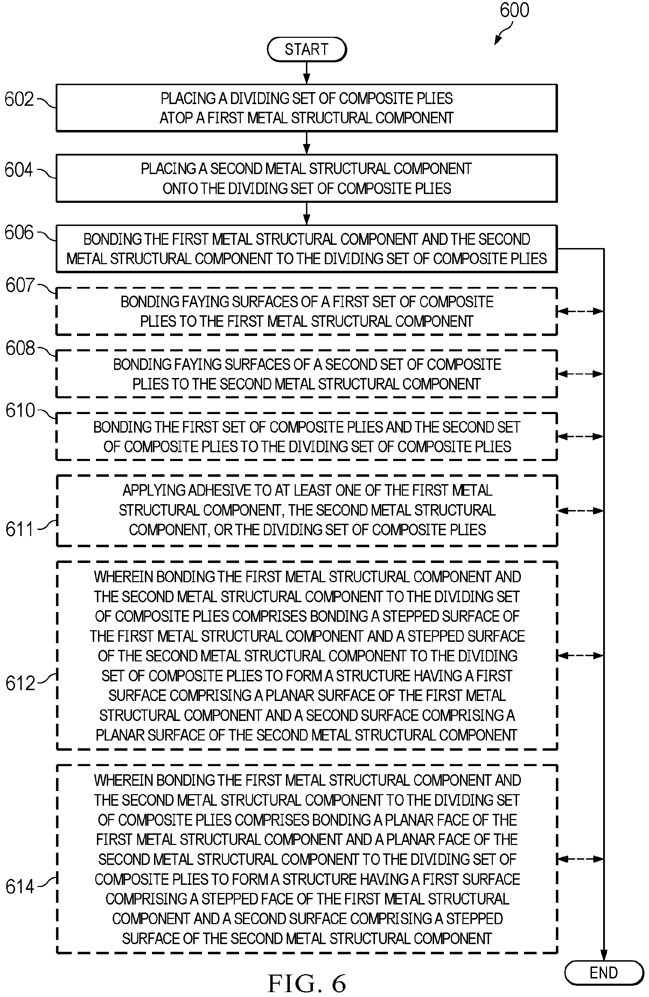

Turning now to **Figure 6****,** a flowchart of a method of forming a metal to composite joint of a structure is depicted in accordance with an illustrative embodiment. Method **600** can be used to form a metal to composite joint of aircraft **100** of Figure **1****.** Method **600** can be used to form metal to composite joint **210** of Figure **2****.** Method **600** can be used to form metal to composite joint **300** of Figure **3****.** Method **600** can be used to form metal to composite joint **400** of Figure **4****.** Method **600** can be used to form metal to composite joint **500** of Figure **5****.**

Method **600** places a dividing set of composite plies atop a first metal structural component (operation **602**). Method **600** places a second metal structural component onto the dividing set of composite plies (operation **604**). Method **600** bonds the first metal structural component and the second metal structural component to the dividing set of composite plies (operation **606**). Afterwards, method **600** terminates.

In some illustrative examples, method **600** bonds faying surfaces of a first set of composite plies to the first metal structural component (operation **607**). In some illustrative examples, the first set of composite plies forms a stepped joint with first metal structural component. In some illustrative examples, the first set of composite plies form a portion of a surface of the metal to composite joint of the structure.

In some illustrative examples, method **600** bonds faying surfaces of a second set of composite plies to the second metal structural component (operation **608**). In some illustrative examples, the second set of composite plies forms a stepped joint with the second metal structural component. In some illustrative examples, the second set of composite plies form a portion of a surface of the metal to composite joint of the structure.

In some illustrative examples, method **600** bonds the first set of composite plies and the second set of composite plies to the dividing set of composite plies (operation **610**). In some illustrative examples, the first set of composite plies and the second set of composite plies are co-bonded to the dividing set of composite plies. In some illustrative examples, an adhesive extends partially between the first set of composite plies and the dividing set of composite plies. In some illustrative examples, an adhesive extends partially between the second set of composite plies and the dividing set of composite plies.

In some illustrative examples, method **600** applies adhesive to at least one of the first metal structural component, the second metal structural component, or the dividing set of composite plies (operation **611**). In some illustrative examples, the adhesive is positioned between the first metal structural component and the dividing set of composite plies. In some illustrative examples, the adhesive is positioned between the second metal structural component and the dividing set of composite plies. In some illustrative examples, the adhesive is positioned between the first metal structural component and the first set of composite plies. In some illustrative examples, the adhesive is positioned between the second metal structural component and the second set of composite plies.

In some illustrative examples, bonding the first metal structural component and the second metal structural component to the dividing set of composite plies comprises bonding a stepped face of the first metal structural component and a stepped face of the second metal structural component to the dividing set of composite plies to form a structure having a first surface comprising a planar face of the first metal structural component and a second surface comprising a planar face of the second metal structural component (operation **612**). In some illustrative examples, a longest surface of the first metal structural component in a length of the structure forms a portion of the first surface. In some illustrative examples, a longest surface of the second metal structural component in a length of the structure forms a portion of the second surface. In these illustrative examples, the composite material can appear to extend between the metal structural components.

In some illustrative examples, bonding the first metal structural component and the second metal structural component to the dividing set of composite plies comprises bonding a planar face of the first metal structural component and a planar face of the second metal structural component to the dividing set of composite plies to form a structure having a first surface comprising a stepped face of the first metal structural component and a second surface comprising a stepped face of the second metal structural component (operation **614**). In some illustrative examples, a longest surface of the first metal structural component in a length of the structure is in a center of the metal to composite joint. In some illustrative examples, a longest surface of the second metal structural component in a length of the structure is in a center of the metal to composite joint. In these illustrative examples, the metal structural components can appear to extend into the composite material.

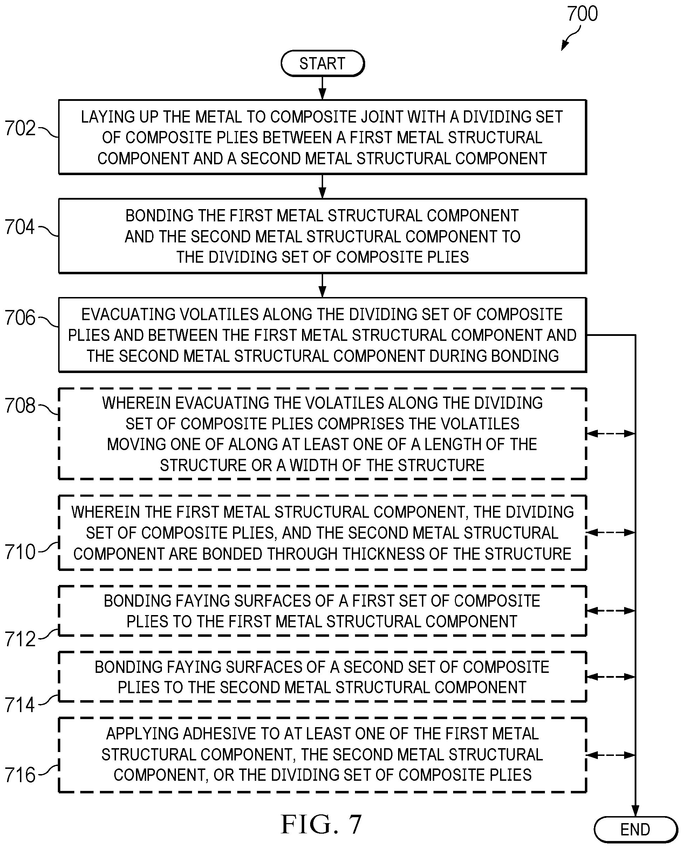

Turning now to **Figure 7****,** a flowchart of a method of releasing volatiles from a metal to composite joint of a structure is depicted in accordance with an illustrative embodiment. Method **700** can be used to release volatiles from a metal to composite joint of aircraft **100** of Figure **1****.** Method **700** can be used to form metal to composite joint **210** of Figure **2****.** Method **700** can be used to form metal to composite joint **300** of Figure **3****.** Method **700** can be used to form metal to composite joint **400** of Figure **4****.** Method **700** can be used to form metal to composite joint **500** of Figure **5****.**

Method **700** lays up the metal to composite joint with a dividing set of composite plies between a first metal structural component and a second metal structural component (operation **702**). Method **700** bonds the first metal structural component and the second metal structural component to the dividing set of composite plies (operation **704**). Method **700** evacuates volatiles along the dividing set of composite plies and between the first metal structural component and the second metal structural component during bonding (operation **706**). Afterwards, method **700** terminates.

In some illustrative examples, evacuating the volatiles along the dividing set of composite plies comprises the volatiles moving one of along at least one of a length of the structure or a width of the structure (operation **708**). By moving along the length or the width of the structure, the volatiles move interlaminarly in the structure. By moving along the length or the width of the structure, the volatiles do not move through the thickness in the structure.

In some illustrative examples, the first metal structural component, the dividing set of composite plies, and the second metal structural component are bonded through thickness of the structure (operation **710**). In these illustrative examples, when moving through the metal to composite joint through the thickness, each of the first metal structural component, the dividing set of composite plies, and the second metal structural component are encountered.

In some illustrative examples, method **700** bonds faying surfaces of a first set of composite plies to the first metal structural component (operation **712**). In some illustrative examples, the first set of composite plies forms a stepped joint with first metal structural component. In some illustrative examples, the first set of composite plies form a portion of a surface of the metal to composite joint of the structure.

In some illustrative examples, method **700** bonds faying surfaces of a second set of composite plies to the second metal structural component (operation **714**). In some illustrative examples, the second set of composite plies forms a stepped joint with the second metal structural component. In some illustrative examples, the second set of composite plies form a portion of a surface of the metal to composite joint of the structure.

In some illustrative examples, method **700** applies adhesive to at least one of the first metal structural component, the second metal structural component, or the dividing set of composite plies (operation **716**). In some illustrative examples, the adhesive is positioned between the first metal structural component and the dividing set of composite plies. In some illustrative examples, the adhesive is positioned between the second metal structural component and the dividing set of composite plies. In some illustrative examples, the adhesive is positioned between the first metal structural component and the first set of composite plies. In some illustrative examples, the adhesive is positioned between the second metal structural component and the second set of composite plies.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **607** through operation **614** may be optional. As another example, operation **708** through operation **716** may be optional.

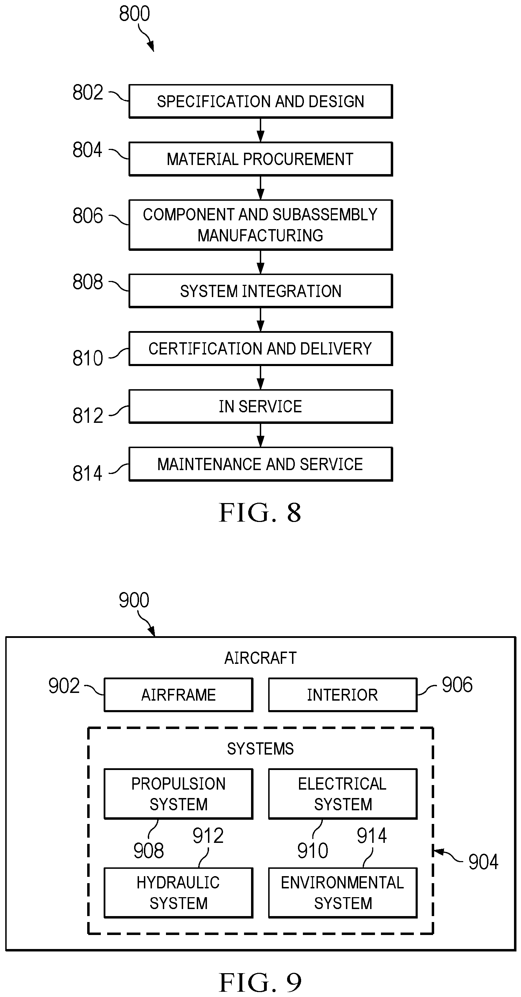

Illustrative embodiments of the present disclosure may be described in the context of aircraft manufacturing and service method **800** as shown in **Figure 8** and aircraft **900** as shown in **Figure 9****.** Turning first to **Figure 8****,** an illustration of an aircraft manufacturing and service method in a form of a block diagram is depicted in accordance with an illustrative embodiment. During pre-production, aircraft manufacturing and service method **800** may include specification and design **802** of aircraft **900** in **Figure 8** and material procurement **804.**

During production, component and subassembly manufacturing **806** and system integration **808** of aircraft **900** takes place. Thereafter, aircraft **900** may go through certification and delivery **810** in order to be placed in service **812.** While in service **812** by a customer, aircraft **900** is scheduled for routine maintenance and service **814,** which may include modification, reconfiguration, refurbishment, or other maintenance and service.

Each of the processes of aircraft manufacturing and service method **800** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft in a form of a block diagram is depicted in which an illustrative embodiment may be implemented. In this example, aircraft **900** is produced by aircraft manufacturing and service method **800** of **Figure 8** and may include airframe **902** with plurality of systems **904** and interior **906.** Examples of systems **904** include one or more of propulsion system **908,** electrical system **910,** hydraulic system **912,** and environmental system **914.** Any number of other systems may be included.

Apparatuses and methods embodied herein may be employed during at least one of the stages of aircraft manufacturing and service method **800.** One or more illustrative embodiments may be manufactured or used during at least one of component and subassembly manufacturing **806,** system integration **808,** in service **812,** or maintenance and service **814** of **Figure 8****.**

The illustrative examples present metal to composite joints with multiple metal structural components. Splitting the titanium into two or more components provides improved part quality and ease of manufacturability. Composite plies can be more easily positioned between two titanium components than inserted into a concavity of a single titanium component.

The illustrative examples enables a weight reduction for airplane wing designs. The illustrative examples provides benefits in quality and damage tolerance.

In the illustrative examples, volatiles and air travel along dividing pling between the Titanium components. The titanium is split through the thickness with additional layers of composite in between to aid in volatile removal during fabrication. The illustrative examples can provide damage tolerance improvements in service. The illustrative examples can improve prevention of crack propagation.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Further, the current disclosure comprises embodiments according to the following clauses:
Clause 1. A metal to composite joint for a platform comprising:
   two metal structural components forming a portion of a first surface and a portion of a second surface of the metal to composite joint; and
   a dividing set of composite plies between the two metal structural components providing an escape path for volatiles between the two metal structural components.
Clause 2. The metal to composite joint of clause 1,
   wherein the dividing set of composite plies is adhered to the two metal structural components.
Clause 3. The metal to composite joint of clause 1 or 2, further comprising:
   a third metal structural component between the two metal structural components, wherein the dividing set of composite plies is adhered to one of the two metal structural components and the third metal structural component.
Clause 4. The metal to composite joint of any of clauses 1 to 3, further comprising:
   a first set of composite plies comprising faying surfaces with a first metal structural component of the two metal structural components; and
   a second set of composite plies comprising faying surfaces with a second metal structural component of the two metal structural components.
Clause 5. The metal to composite joint of clause 4,
   wherein the first set of composite plies is complementary to the first metal structural component, and wherein the second set of composite plies is complementary to the second metal structural component.
Clause 6. The metal to composite joint of any of clauses 1 to 5, wherein the two metal structural components are symmetric about a center of the metal to composite joint through the thickness.
Clause 7. The metal to composite joint of any of clauses 4 to 6, wherein the dividing set of composite plies extends between the first set of composite plies and the second set of composite plies.
Clause 8. The metal to composite joint of any of clauses 4 to 7, wherein the first set of composite plies forms a lapped joint with a stepped face of the first metal structural component.
Clause 9. The metal to composite joint of any of clauses 4 to 8, wherein the second set of composite plies forms a lapped joint with a stepped face of the second metal structural component.
Clause 10. The metal to composite joint of any of clauses 4 to 9, a structural adhesive covering faying surfaces of the two metal structural components with the first set of composite plies and the second set of composite plies.
Clause 11. The metal to composite joint of any of clauses 1 to 10, wherein the two metal structural components comprise titanium.
Clause 12. The metal to composite joint of any of clauses 1 to 11, wherein the platform is a wing of an aircraft.
Clause 13. The metal to composite joint of any of clauses 1 to 12, wherein the two metal structural components comprise:
   a first metal structural component comprising a stepped face and a planar face; and
   a second metal structural component comprising a stepped face and a planar face, wherein the planar faces of the first metal structural component and the second metal structural component form surfaces of the platform. Clause 14. The metal to composite joint of any of clauses 1 to 13, wherein the two metal structural components comprise:
   a first metal structural component comprising a stepped face and a planar face; and
   a second metal structural component comprising a stepped face and a planar face, wherein the dividing set of composite plies is bonded to the planar faces of the first metal structural component and the second metal structural component.
Clause 15. A metal to composite joint for a platform comprising:
   a first metal structural component comprising a stepped face and a planar face;
   a first set of composite plies comprising faying surfaces complementary to the stepped face of the first metal structural component;
   a second metal structural component comprising a stepped face and a planar face;
   a second set of composite plies comprising faying surfaces complementary to the stepped face of the second metal structural component; and
   a dividing set of composite plies between the first metal structural component and the second metal structural component providing an escape path for volatiles between the first metal structural component and the second metal structural component.
Clause 16. The metal to composite joint of clause 15, wherein the dividing set of composite plies extends between and is adhered to the planar faces of the first metal structural component and the second metal structural component.
Clause 17. The metal to composite joint of clause 15, wherein the dividing set of composite plies extends between and is adhered to the stepped faces of the first metal structural component and the second metal structural component.
Clause 18. The metal to composite joint of clause 15 or 16, wherein the first metal structural component and the second metal structural component comprise titanium. Clause 19. The metal to composite joint of any of clauses 15 to 18, wherein the platform is a wing of an aircraft. Clause 20. A method of forming a metal to composite joint of a structure comprising:
   placing a dividing set of composite plies atop a first metal structural component;
   placing a second metal structural component onto the dividing set of composite plies; and
   bonding the first metal structural component and the second metal structural component to the dividing set of composite plies.
Clause 21. The method of clause 20 further comprising:
   bonding faying surfaces of a first set of composite plies to the first metal structural component; and
   bonding faying surfaces of a second set of composite plies to the second metal structural component.
Clause 22. The method of clause 21, further comprising:
   bonding the first set of composite plies and the second set of composite plies to the dividing set of composite plies.
Clause 23. The method of any of clauses 20 to 22, wherein bonding the first metal structural component and the second metal structural component to the dividing set of composite plies comprises bonding a stepped face of the first metal structural component and a stepped face of the second metal structural component to the dividing set of composite plies to form a structure having a first surface comprising a planar face of the first metal structural component and a second surface comprising a planar face of the second metal structural component.
Clause 24. The method of any of clauses 20 to 23, wherein bonding the first metal structural component and the second metal structural component to the dividing set of composite plies comprises bonding a planar face of the first metal structural component and a planar face of the second metal structural component to the dividing set of composite plies to form a structure having a first surface comprising a stepped face of the first metal structural component and a second surface comprising a stepped face of the second metal structural component. Clause 25. The method of any of clauses 20 to 24, further comprising:
   applying adhesive to at least one of the first metal structural component, the second metal structural component, or the dividing set of composite plies. Clause 26. A method of removing volatiles from a metal to composite joint of a structure comprising:
   laying up the metal to composite joint with a dividing set of composite plies between a first metal structural component and a second metal structural component;
   bonding the first metal structural component and the second metal structural component to the dividing set of composite plies; and
   evacuating volatiles along the dividing set of composite plies and between the first metal structural component and the second metal structural component during bonding.
Clause 27. The method of clause 26, wherein evacuating the volatiles along the dividing set of composite plies comprises the volatiles moving one of along at least one of a length of the structure or a width of the structure.
Clause 28. The method of clause 26 or 27, wherein the first metal structural component, the dividing set of composite plies, and the second metal structural component are bonded through thickness of the structure.
Clause 29. The method of any of clauses 26 to 28, further comprising:
   bonding faying surfaces of a first set of composite plies to the first metal structural component; and
   bonding faying surfaces of a second set of composite plies to the second metal structural component.
Clause 30. The method of any of clauses 26 to 29, further comprising:
   applying adhesive to at least one of the first metal structural component, the second metal structural component, or the dividing set of composite plies. Clause 31. A wing of an aircraft comprising the metal to composite joint of any of clauses 1 to 19.
Clause 32. An aircraft comprising the wing according to clause 31.
Clause 33. An aircraft comprising the metal to composite joint of any of clauses 1 to 19.

## Claims

1. A metal to composite joint (210, 300, 400, 500) for a platform (202) comprising:
two metal structural components (212, 214, 302, 402, 502) forming a portion of a first surface (226, 316, 416, 526) and a portion of a second surface (228, 318, 418, 528) of the metal to composite joint (210, 300, 400, 500); and
a dividing set of composite plies (222, 310, 410, 512, 514, 516) between the two metal structural components (212, 214, 302, 402, 502) providing an escape path (224, 311, 411, 532, 534, 536) for volatiles (223) between the two metal structural components (212, 214, 302, 402, 502).

2. The metal to composite joint (210, 300, 400, 500) of claim 1, wherein the dividing set of composite plies (222, 310, 410, 512, 514, 516) is adhered to the two metal structural components (212, 214, 302, 402, 502).

3. The metal to composite joint (210, 300, 400, 500) of claim 1 or 2, further comprising:
a third metal structural component (506 or 508) between the two metal structural components (212, 214, 302, 402, 502), wherein the dividing set of composite plies (222, 310, 410, 512, 516) is adhered to one of the two metal structural components (212, 214, 302, 402, 502) and the third metal structural component (506 or 508).

4. The metal to composite joint (210, 300, 400, 500) of any of claims 1 to 3, further comprising:
a first set of composite plies (230, 312, 412, 518) comprising faying surfaces with a first metal structural component (212, 306, 406, 504) of the two metal structural components (212, 214, 302, 402, 502); and
a second set of composite plies (232, 314, 414, 524) comprising faying surfaces with a second metal structural component (214, 308, 408, 510) of the two metal structural components (212, 214, 302, 402, 502).

5. The metal to composite joint (210, 300, 400, 500) of claim 4, wherein the first set of composite plies (230, 312, 412, 518) is complementary to the first metal structural component (212, 306, 406, 504), and wherein the second set of composite plies (232, 314, 414, 524) is complementary to the second metal structural component (214, 308, 408, 510).

6. The metal to composite joint (210, 300, 400, 500) of any of claims 1 to 5, wherein the two metal structural components (212, 214, 302, 402, 502) are symmetric about a center (348, 448) of the metal to composite joint (210, 300, 400, 500) through the thickness (246, 346, 446, 530).

7. The metal to composite joint (210, 300, 400, 500) of any of claims 4 to 6, wherein the dividing set of composite plies (222, 310, 410, 512, 514, 516) extends between the first set of composite plies (230, 312, 412, 518) and the second set of composite plies (232, 314, 414, 524).

8. The metal to composite joint (210, 300, 400, 500) of any of claims 4 to 7, wherein the first set of composite plies (230, 312, 412, 518) forms a lapped joint (242) with a stepped face (216, 320, 420) of the first metal structural component (212, 306, 406, 504).

9. The metal to composite joint (210, 300, 400, 500) of any of claims 4 to 8, wherein the second set of composite plies (232, 314, 414, 524) forms a lapped joint (243) with a stepped face (221, 324, 424) of the second metal structural component (214, 308, 408).

10. The metal to composite joint (210, 300, 400, 500) of any of claims 4 to 9, a structural adhesive (244, 328, 428) covering faying surfaces of the two metal structural components (212, 214, 302, 402, 502) with the first set of composite plies (230, 312, 412, 518) and the second set of composite plies (232, 314, 414, 524).

11. The metal to composite joint (210, 400) of any of claims 1 to 10, wherein the two metal structural components (212, 214, 302, 402, 502) comprise:
a first metal structural component (212, 406) comprising a stepped face (216, 420) and a planar face (218, 422); and
a second metal structural component (214, 408) comprising a stepped face (221, 424) and a planar face (220, 426), wherein the planar faces (218, 220, 422, 426) of the first metal structural component (212, 406) and the second metal structural component (214, 408) form surfaces (226, 228, 416, 418) of the platform (202).

12. The metal to composite joint (210, 300) of any of claims 1 to 11, wherein the two metal structural components (212, 214, 302) comprise:
a first metal structural component (212, 306) comprising a stepped face (216, 320) and a planar face (218, 322); and
a second metal structural component (214, 308) comprising a stepped face (221, 324) and a planar face (220, 326), wherein the dividing set of composite plies (222, 310) is bonded to the planar faces (218, 220, 322, 326) of the first metal structural component (212, 306) and the second metal structural component (214, 308).

13. A metal to composite joint (210, 300, 400, 500) for a platform (202) comprising:
a first metal structural component (212, 306, 406, 504) comprising a stepped face (216, 320, 420) and a planar face (218, 322, 422);
a first set of composite plies (230, 312, 412, 518) comprising faying surfaces complementary to the stepped face (216, 320, 420) of the first metal structural component (212, 306, 406, 504;
a second metal structural component (214, 308, 408, 506) comprising a stepped face (221, 324, 424) and a planar face (220, 326, 426);
a second set of composite plies (232, 314, 414, 524) comprising faying surfaces complementary to the stepped face (216, 221, 320, 324, 420, 424) of the second metal structural component (214, 308, 408, 506); and
a dividing set of composite plies (222, 310, 410, 512, 514, 516) between the first metal structural component (212, 306, 406, 504) and the second metal structural component (214, 308, 408, 506) providing an escape path (224, 311, 411, 532, 534, 536) for volatiles (223) between the first metal structural component (212, 306, 406, 504) and the second metal structural component (214, 308, 408, 506).

14. A method (600) of forming a metal to composite joint (210, 300, 400, 500) of a structure (538) comprising:
placing (602) a dividing set of composite plies (222, 310, 410, 512, 514, 516) atop a first metal structural component (212, 306, 406, 504);
placing (604) a second metal structural component (214, 308, 408, 506) onto the dividing set of composite plies (222, 310, 410, 512, 514, 516); and
bonding (606) the first metal structural component (212, 306, 406, 504) and the second metal structural component (214, 308, 408, 506) to the dividing set of composite plies (222, 310, 410, 512, 514, 516).

15. A method (700) of removing volatiles (223) from a metal to composite joint (210, 300, 400, 500) of a structure (538) comprising:
laying up (702) the metal to composite joint (210, 300, 400, 500) with a dividing set of composite plies (222, 310, 410, 512, 514, 516) between a first metal structural component (212, 306, 406, 504) and a second metal structural component (214, 308, 408, 506);
bonding (704) the first metal structural component (212, 306, 406, 504) and the second metal structural component (214, 308, 408, 506) to the dividing set of composite plies (222, 310, 410, 512, 514, 516); and
evacuating (706) volatiles (223) along the dividing set of composite plies (222, 310, 410, 512, 514, 516) and between the first metal structural component (212, 306, 406, 504) and the second metal structural component (214, 308, 408, 506) during bonding.
